# EUROPÄISCHE PATENTANMELDUNG

(11) **EP 1 233 597 A2**
(43) Veröffentlichungstag der Anmeldung: **21.08.2002**
(21) Anmeldenummer: 02100097.1
(22) Anmeldetag: 01.02.2002
(51) Int. Cl.: H04M 1/02, G06F 3/023

(54) **Kleingerätesystem mit erweiterten Eingabemöglichkeiten**

(30) Priorität: 14.02.2001 DE 10106812
(71) Anmelder: SIEMENS AKTIENGESELLSCHAFT, 80333 München (DE)
(72) Erfinder: Blaimberger, Frank, 86399, Bobingen (DE); Grundel, Christoph, 80337, München (DE); Maly, Peter, 80799, München (DE); Obermaier, Anton, 80637, München (DE); Schacht, Manfred, 80335, München (DE); Stiegel, Susanne, 86415, Mering (DE)

(57) **Zusammenfassung**

Erfindungsgemäß wird die Verbindung, vorzugsweise in Form einer Steckverbindung (5, 6), zwischen der Eingabeeinheit (1) und der Ausgabeeinheit (2) eines Kleingerätesystems so ausgestaltet, dass die Orientierung von Eingabeeinheit (1) und Ausgabeeinheit (2) veränderbar ist, wobei die Eingabeeinheit (1) auf mehreren Seiten Eingabemittel (3, 7) aufweist. Auf diese Weise können beispielsweise auch die bislang ungenutzten Geräterückseiten zur Anordnung von Eingabemitteln (3, 7) genutzt werden, da sich bei Bedarf die Eingabeeinheit (1) umdrehen lässt und so die auf deren Rückseite angeordneten Eingabemittel (7) nutzbar werden.

## Beschreibung

Die Erfindung betrifft ein Kleingerätesystem mit Eingabemitteln und einer Einrichtung zur Ausgabe von Informationen.

Insbesondere bei elektronischen Kleingeräten mit Eingabemitteln und einer Ausgabeeinrichtung für Informationen beispielsweise in Form einer optischen Anzeige tritt häufig das Problem auf, dass zum einen eine kleine Baugröße und zum anderen immer mehr in das Gerät implementierte Funktionen angestrebt werden. Eine erhöhte Anzahl von Funktionen erfordert jedoch in der Regel eine höhere Anzahl von Eingabemitteln beziehungsweise eine höhere Anzahl von verschiedenen möglichen Eingaben. Um eine höhere Anzahl von möglichen Eingaben zu erreichen, ist es bekannt, den Eingabemitteln über eine Anzeige wechselnde Bedeutungen zuzumessen und zusammen mit der Anzeige eine Menüsteuerung zu realisieren. Eine Menüsteuerung erfordert eine große und kostspielige Anzeige und ist umständlich und langsam zu bedienen.

Eine andere Möglichkeit besteht in der Erhöhung der Anzahl an Eingabemittel, im einfachsten Fall Eingabetasten. Dies führt jedoch zu einem höheren Platzbedarf, der der Forderung nach einer geringen Baugröße zuwiderläuft. Durch eine kleinere Ausgestaltung der Eingabemittel wiederum wird jedoch nachteiligerweise die Bedienung erschwert.

Weiterhin ist es in manchen Fällen erwünscht, für verschiedene Bedienvorgänge unterschiedliche Eingabemittel zu verwenden. Beispielsweise kann gewünscht sein, dass ein Gerät sowohl über Eingabetasten als auch über andere Eingabemittel, wie beispielsweise einen Trackball, ein Drehrad oder ein Touchpad, verfügt. Dabei kann es vorkommen, dass manche Eingabemittel zwar vorteilhaft sind, aber nur selten benötigt werden. Eine Anordnung aller erwünschten Eingabemittel würde bei den bekannten Geräten entweder eine nachteilig geringe Größe der einzelnen Eingabemittel oder eine nachteilig große Baugröße des Geräts nach sich ziehen.

Aufgabe der vorliegenden Erfindung ist es, ein Kleingerätesystem beziehungsweise einen Teil einen solchen Kleingerätesystems der eingangs genannten Art zu schaffen, bei denen bei geringer Baugröße die Bedienbarkeit und die Bedienmöglichkeiten verbessert werden können.

Erfindungsgemäß wird diese Aufgabe durch die im Patentanspruch 1 beziehungsweise Patentanspruch 9 beziehungsweise Patentanspruch 10 genannten Merkmale gelöst. Vorteilhafte Ausgestaltungen und Weiterbildungen der Erfindung ergeben sich aus den nachfolgenden Unteransprüchen.

Durch die zusätzlich geschaffene Möglichkeit, die Eingabemittel auf mehreren Seiten der Eingabeeinheit anzuordnen, steht mehr Platz für Eingabemittel zur Verfügung, wobei keine Vergrößerung der Gerätebaugröße in Kauf genommen werden muss. Zusätzlich können auf diese Weise die Eingabemittel in mehrere Gruppen aufgeteilt werden, die an unterschiedliche Bedienvorgänge angepasst sein können, so dass für die Bedienvorgänge jeweils vorteilhaft ausgewählte und/oder vorteilhaft angeordnete Bedienelemente zur Verfügung stehen. Beispielsweise können auf diese Weise die bisher ungenutzten Rückseiten der Geräte zur Anordnung von Eingabemitteln genutzt werden.

Beispielsweise können Eingabemittel auf der Vorder- und der Rückseite eines im wesentlichen flachen Geräts angeordnet werden, wobei die Ausgabeeinheit abhängig von der jeweiligen Bedienhandlung so angeordnet werden kann, dass sich eine Anzeige der Ausgabeeinheit über den jeweils für den gewünschten Bedienvorgang erforderlichen oder vorteilhaften Eingabemitteln befindet. Beispielsweise kann ein Mobilfunkgerät auf der einen Seite mit dem übliche Tastenfeld und auf der anderen Seite mit einem Trackball oder einem Touchpad ausgerüstet sein, um Bedienhandlungen vorzunehmen, die sich mit einem Trackball oder einem Touchpad leichter und/oder schneller durchführen lassen. Dies kann beispielsweise das Einrichten des Mobilfunkgeräts, das Navigieren in Informationssystemen wie dem Internet oder die Eingabe von Zeichnungen sein.

Ein anderes Anwendungsgebiet der Erfindung liegt bei den Fernbedienungen insbesondere für Geräte der Unterhaltungselektronik. In der Regel ist für jedes Gerät eine eigene Fernbedienung vorhanden, die über Eingabemittel verfügt, die in Auswahl und Anordnung den Funktionen des fernzubedienenden Geräts angepasst sind. Es sind Mehrfachfernbedienungen bekannt, die für die Fernbedienung mehrerer Geräte geeignet sind, die jedoch für alle Geräte das gleiche Tastenfeld beziehungsweise Eingabemittelfeld aufweisen. Bei solchen Mehrfachfernbedienungen sind die Eingabemittel für die verschiedenen Geräte mehrfach belegt, wobei nachteiligerweise die Bedienung unübersichtlich ist und zusätzlich die Anordnung und Art der Eingabemittel nicht auf die einzelnen fernzubedienenden Geräte hin optimiert werden kann.

Bei Verwendung der erfindungsgemäßen Lösung kann für verschiedene fernzusteuernde Geräte beziehungsweise Gerätegruppen und/oder für verschiedene Bedienvorgänge beziehungsweise Gruppen von Bedienvorgängen ein eigenes Bedienmittelfeld vorgesehen werden. Die verschiedenen Bedienmittelfelder können entsprechend dem jeweiligen fernzubedienenden Gerät beziehungsweise dem beabsichtigten Bedienvorgang ausgewählt werden, so dass für jeden Anwendungsfall ein angepasstes Bedienmittelfeld zu Verfügung steht.

Wird bei der Eingabeeinheit und der Ausgabeeinheit jeweils eine Verbindungseinrichtung vorgesehen, die sich in verschiedenen Orientierungen zueinander miteinander verbinden und wieder voneinander lösen lassen, kann die erfindungsgemäße Lösung mit geringem Aufwand erreicht werden. Die Verbindungseinrichtung kann beispielsweise eine Steckverbindung oder eine Schiebeverbindung sein. Zum Verändern der Orientierung zwischen Eingabeeinheit und Ausgabeeinheit muss eine Bedienperson nur die beiden Einheiten trennen und in einer anderen Orientierung wieder miteinander verbinden. Insbesondere Steckverbindungen, die ein Zusammenstecken in verschiedenen Orientierungen ermöglichen, sind besonders kostengünstig.

Weiterhin kann auch zumindest eine der beiden Einheiten wenigstens zwei Verbindungseinrichtungen aufweisen, von denen wenigstens zwei mit einer Verbindungseinrichtung der jeweils anderen Einheit verbunden werden können. Beispielsweise kann die Eingabeeinheit zwei Steckverbindungsplätze aufweisen, die jeweils so in Bezug zu einem von zwei Bedienmittelfeldern angeordnet sind, dass eine darin eingesteckte Ausgabeeinheit sich in unmittelbarer Nähe zu dem entsprechenden Bedienmittelfeld befindet.

Ebenso kann die Ausgabeeinheit zwei Steckverbindungsplätze aufweisen, die eine Verbindung der Ausgabeeinheit in zwei verschiedenen Orientierungen mit der Eingabeeinheit ermöglichen, so dass sich beispielsweise eine Anzeigefläche der Ausgabeeinheit abhängig vom Anstecken mit dem einen oder dem anderen Steckverbindungsplatz auf der einen oder der anderen Seite der Eingabeeinheit befindet, wobei auf beiden Seiten der Eingabeeinheit Eingabemittel angeordnet sind.

Bei einer drehbaren Verbindung zwischen Eingabeeinheit und Ausgabeeinheit kann die Verbindung nicht lösbar ausgestaltet werden, so dass die beiden Einheiten nicht voneinander getrennt werden können und nicht eine der beiden Einheiten verloren gehen kann. Ferner können bei einer drehbaren Verbindung nahezu beliebig viele Möglichkeiten für eine unterschiedliche Orientierung zwischen Eingabe- und Ausgabeeinheit erreicht werden. Wird beispielsweise eine flache Eingabeeinheit auf Vorder- und Rückseite mit unterschiedlichen Bedienmitteln versehen, so können durch einfaches Verdrehen der beiden Einheiten gegeneinander um 180° die zur Verfügung stehenden Bedienmittel geändert werden.

In einer vorteilhaften Ausführungsform erkennt das Kleingerätesystem die Orientierung zwischen Eingabeeinheit und Ausgabeeinheit und verändert in Abhängigkeit davon ein im Kleingerätesystem angewandtes Steuerungsverfahren. Beispielsweise kann die Art der Ausgabe der Informationen und insbesondere die Darstellungsweise der Informationen auf einer Anzeige geändert werden. Weiterhin kann bei einem durch ein Programm oder eine Applikation gesteuerten Kleingerätesystem abhängig von der erkannten Orientierung eine bestimmte Applikation gestartet werden.

So kann durch eine Änderung der Orientierung durch die Bedienperson automatisch ein bestimmtes Unterprogramm gestartet oder ein bestimmter Menüpunkt aufgerufen werden, wodurch die Bedienung beschleunigt und vereinfacht wird.

Ein Ausführungsbeispiel der Erfindung ist in den Zeichnungen rein schematisch dargestellt und wird nachfolgend näher beschrieben. Es zeigen
- Fig. 1: eine Vorderansicht eines erfindungsgemäßen Kleingerätesystems mit einer Ausgabeeinheit und einer Eingabeeinheit und
- Fig. 2: das Kleingerätesystem gemäß Fig. 1 bei umgedrehter Eingabeeinheit.

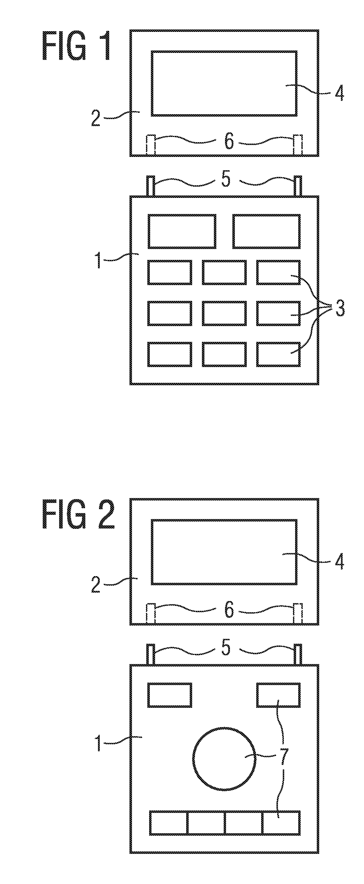

Das in Fig. 1 dargestellte Kleingerätesystem, das im vorliegenden Fall ein mobiles Funktelefon ist, weist eine Ausgabeeinheit 2 mit einer Anzeige 4 zur optischen Darstellung von Informationen auf. Die Ausgabeeinheit 2 besitzt die Form eines flachen Quaders und weist auf einer schmalen, rechtwinklig zur Anzeige 4 verlaufenden Stirnseite Steckverbindungsmittel 6 auf.

Das Kleingerätesystem umfasst weiterhin eine Eingabeeinheit 1, die ebenfalls die Form eines flachen Quaders mit einer Vorder- und einer Rückseite besitzt. Die Eingabeeinheit 1 weist auf der Vorderseite erste Eingabemittel 3 in Form von Tasten 3 auf, die ein Bedienfeld bilden.

Auf einer flachen Stirnseite weist die Eingabeeinheit 1 weiterhin Steckverbindungsmittel 5 auf, die mit den Steckverbindungsmitteln 6 der Ausgabeeinheit 2 zusammenwirken können. Die beiden Steckverbindungsmittel 5, 6 sind so ausgestaltet, dass sich die Eingabeeinheit 1 und die Ausgabeeinheit 2 in zwei verschiedenen Orientierungen zueinander zusammenstecken lassen, wobei in einem Fall die Anzeige 4 über der Vorderseite und im anderen Fall über der Rückseite der Eingabeeinheit 1 angeordnet ist.

In Fig. 2 ist das Funktelefon bei umgedrehter Eingabeeinheit 1 dargestellt, so dass in dieser Darstellung die Rückseite der Eingabeeinheit 1 zu sehen ist. Auf der Rückseite weist die Eingabeeinheit 1 zweite Eingabemittel 7 auf, die neben Tasten auch einen Trackball umfassen.

Die mittels der Steckverbindungsmittel 5, 6 zwischen der Eingabeeinheit 1 und der Ausgabeeinheit 2 herstellbare Verbindung ermöglicht weiterhin den Austausch von Daten. Dabei kann die Steckverbindung 5, 6 zusätzlich auch zur Stromversorgung einer der beiden Einheiten 1, 2 verwendet werden, so dass bei einer der beiden Einheit 1, 2 auf eine eigene Stromversorgung verzichtet werden kann.

Eine nicht dargestellte Steuerung des Funktelefons ist entweder in der Eingabeeinheit 1 oder der Ausgabeeinheit 2 angeordnet, wobei über die Verbindungsmittel 5, 6 im ersten Fall Signale zur Ansteuerung der Anzeige 4 und im zweiten Fall die von den Eingabemitteln 3, 7 erzeugten Signale übertragen werden.

Die Steuerung und die Steckverbindungsmittel 5, 6 sind so eingerichtet, dass die Steuerung die Orientierung zwischen Eingabeeinheit 1 und Ausgabeeinheit 2 erkennen kann.

Das Funktelefon ist weiterhin so eingerichtet, dass die Verbindung zwischen Eingabeeinheit 1 und Ausgabeeinheit 2 getrennt werden kann, ohne das Funktelefon ausschalten zu müssen. Die Steuerung ordnet den beiden möglichen Orientierungen, die jeweils der Vorderseite mit den ersten Eingabemitteln 3 beziehungsweise der Rückseite mit den zweiten Eingabemitteln 7 entsprechen, unterschiedliche Steuerprogramme zu.

Dabei ist die Vorderseite mit dem ausschließlich Tasten 3 umfassenden Eingabefeld dem üblichen Telefoniebetrieb und die Rückseite mit dem neben Tasten 7 auch einen Trackball 7 aufweisenden Eingabefeld der Navigation in Informationssystemen, insbesondere dem Internet, zugeordnet.

Soll nun das Funktelefon zum Telefonieren genutzt werden, so werden die Eingabeeinheit 1 und die Ausgabeeinheit 2 so zusammengesteckt, dass sich unterhalb der Anzeige 4 die Vorderseite der Eingabeeinheit 1 mit den Tasten 3 befindet, mit denen sich die zum Telefonieren üblichen Bedienhandlungen vornehmen lassen.

Wird das Funktelefon zum Navigieren im Internet verwendet, wird die Eingabeeinheit 1 umgedreht an die Ausgabeeinheit 2 gesteckt, so dass sich die Rückseite mit den gemischten Eingabemitteln 7 unter der Anzeige 4 befindet. Auf diese Weise kann zum Navigieren der Trackball 7 verwendet werden, mit dem die Bedienung in diesem Anwendungsfall wesentlich vereinfacht wird.

Dabei kann vorgesehen sein, dass sich die jeweilige Betriebsart Telefonieren oder Navigieren nur bei entsprechend ausgewählten und unterhalb der Anzeige 4 angeordneten Bedienelementen 3 beziehungsweise 7 aktivieren lässt. Eine weitere Möglichkeit besteht darin, dass beim Herstellen beispielsweise der zum Navigieren vorteilhaften Orientierung zwischen Eingabeeinheit 1 und Ausgabeeinheit 2 automatisch ein bestimmtes Steuerungsprogramm aufgerufen wird, das die Verbindung zum Internet herstellt.

Die Steuerung ist weiterhin so eingerichtet, dass die Eingabemittel 3, 7 inaktiviert sind, die gerade auf der der Anzeige 4 abgewandten Seite angeordnet sind. Damit kann verhindert werden, dass die in Bezug auf die Anzeige 4 auf der Rückseite angeordneten und nicht zur Bedienung verwendeten Eingabemittel 3, 7 durch versehentliche Betätigung die Bedienung des Funktelefons stören.

## Patentansprüche

1. Kleingerätesystem mit einer Eingabeeinheit (1) mit Eingabemitteln (3, 7) und einer mit der Eingabeeinheit (1) verbindbaren Ausgabeeinheit (2) zur Ausgabe von Informationen,
wobei die Verbindung zwischen Eingabeeinheit (1) und Ausgabeeinheit (2) eine veränderbare Orientierung der Eingabeeinheit (1) und der Ausgabeeinheit (2) zueinander ermöglicht und die Eingabeeinheit (1) auf wenigstens zwei Seiten Eingabemittel (3, 7) aufweist.

2. Kleingerätesystem nach Anspruch 1,
**dadurch gekennzeichnet,**
**dass** die Verbindung zwischen Eingabeeinheit (1) und Ausgabeeinheit (2) lösbar ist.

3. Kleingerätesystem nach Anspruch 2,
**dadurch gekennzeichnet,**
**dass** die Eingabeeinheit (1) und die Ausgabeeinheit (2) jeweils wenigstens eine Einrichtung (5, 6) zur wechselseitigen Verbindung aufweist, wobei die Verbindungseinrichtung (5) der Eingabeeinheit (1) und die Verbindungseinrichtung (6) der Ausgabeeinheit (2) in wenigstens zwei unterschiedlichen Orientierungen zueinander verbindbar sind.

4. Kleingerätesystem nach Anspruch 2 oder 3,
**dadurch gekennzeichnet,**
**dass** die Eingabeeinheit (1) oder die Ausgabeeinheit (2) wenigstens zwei Verbindungseinrichtungen aufweist, die mit einer Verbindungseinrichtung der jeweils anderen Einheit (1, 2) verbindbar sind.

5. Kleingerätesystem nach einem der Ansprüche 1 bis 4,
**dadurch gekennzeichnet,**
**dass** die Verbindung zwischen der Eingabeeinheit (1) und der Ausgabeeinheit (2) verdrehbar ist.

6. Kleingerätesystem nach einem der Ansprüche 1 bis 5,
**dadurch gekennzeichnet,**
**dass** das Kleingerätesystem eine Einrichtung zum Erkennen der Orientierung der Eingabeeinheit (1) gegenüber der Ausgabeeinheit (2) und eine Steuerung aufweist, wobei die Steuerung derart eingerichtet ist, dass sie in Abhängigkeit der erkannten Orientierung ein verwendetes Steuerungsverfahren und/oder ein Verfahren zur Ausgabe von Informationen durch die Ausgabeeinheit (2) beeinflusst.

7. Kleingerätesystem nach einem der Ansprüche 1 bis 6,
**dadurch gekennzeichnet,**
**dass** das Kleingerätesystem ein Kommunikationsendgerät, insbesondere ein Mobilfunkgerät ist.

8. Kleingerätesystem nach einem der Ansprüche 1 bis 7,
**dadurch gekennzeichnet,**
**dass** die Ausgabeeinheit (2) eine Anzeige (4) zur optischen Darstellung von Informationen aufweist.

9. Eingabeeinheit zur Verwendung in einem Kleingerätesystem nach einem der Ansprüche 1 bis 8,
**dadurch gekennzeichnet,**
**dass** die Eingabeeinheit (1) Eingabemittel (3, 7), die auf wenigstens zwei Seiten der Eingabeeinheit (1) angeordnet sind, und wenigstens eine Verbindungseinrichtung (5) zum Verbinden der Eingabeeinheit (1) mit einer Ausgabeeinheit (2) aufweist, wobei die Verbindungseinrichtung (5) eine veränderbare Orientierung der Eingabeeinheit (1) gegenüber der Ausgabeeinheit (2) ermöglicht.

10. Ausgabeeinheit zur Verwendung in einem Kleingerätesystem nach einem der Ansprüche 1 bis 8,
**dadurch gekennzeichnet,**
**dass** die Ausgabeeinheit (2) eine Einrichtung (4) zur Ausgabe von Informationen und eine Verbindungseinrichtung (6) zum Verbinden der Ausgabeeinheit (2) mit einer Eingabeeinheit (1) aufweist, wobei die Verbindungseinrichtung (6) eine veränderbare Orientierung der Ausgabeeinheit (2) gegenüber der Eingabeeinheit (1) ermöglicht.
